# EUROPEAN PATENT APPLICATION

(11) **EP 4 561 233 A1**
(43) Date of publication of application: **28.05.2025**
(21) Application number: 23862002.5
(22) Date of filing: 28.06.2023
(51) Int. Cl.: H04W 72/04

(54) **COMMUNICATION METHOD AND APPARATUS**

(30) Priority: 09.09.2022 CN 202211103970
(71) Applicant: Huawei Technologies Co., Ltd., Shenzhen, Guangdong 518129 (CN)
(72) Inventor: LI, Weihua, Shenzhen, Guangdong 518129 (CN); MA, Yunsi, Shenzhen, Guangdong 518129 (CN)
(74) Representative: Pfenning, Meinig & Partner mbB
(86) International application number: PCT/CN2023/103356
(87) International publication number: WO 2024/051301

(57) **Abstract**

This application pertains to the field of communication technologies, and provides a communication method and apparatus, to avoid access difficulty of a device, and meet a communication requirement of the device when a signal is transmitted on frequency domain resource in an unlicensed frequency band. In the method, there may be a priority relationship between different communication manners. For example, a priority of a first communication manner is higher than a priority of a second communication manner. In this case, compared with a device using the second communication manner, a device using the first communication manner may be configured with a dedicated frequency domain resource set in the unlicensed frequency band, or preferentially configured with a frequency domain resource set, for example, a first frequency domain resource set, in the unlicensed frequency band. In this way, the device using the first communication manner, for example, a first device, can directly transmit the signal on frequency domain resource in the first frequency domain resource set, to avoid access difficulty of the device, and meet the communication requirement of the device.

## Description

This application claims priority to Chinese Patent Application No. 202211103970.5, filed with the China National Intellectual Property Administration on September 9, 2022 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

Listen before talk (listen before talk, LBT) is a channel access mechanism widely used in wireless communication. In the LBT mechanism, a device needs to monitor a channel before performing data transmission, to evaluate whether the channel is idle. This ensures that data transmission is performed when the channel is idle, and therefore avoids a data conflict. Typical devices using the LBT mechanism include a wireless fidelity (wireless fidelity, Wi-Fi) device and a SparkLink (SparkLink) device. When the Wi-Fi device and the SparkLink device share an unlicensed frequency band, both the Wi-Fi device and the SparkLink device need to preempt frequency domain resource in the unlicensed frequency band by using the LBT mechanism. For example, if the Wi-Fi device occupies the frequency domain resource in the unlicensed frequency band before the SparkLink device, the SparkLink device can perform signal transmission on the frequency domain resource only after the frequency domain resource is idle.

However, when the Wi-Fi device and the SparkLink device preempt the frequency domain resource in the unlicensed spectrum by using the LBT mechanism, it may cause access difficulty of the device, and cannot meet a communication requirement of the device.

### SUMMARY

Embodiments of this application provide a communication method and apparatus, to avoid access difficulty of a device, and meet a communication requirement of the device when a signal is transmitted on frequency domain resource in an unlicensed frequency band.

To achieve the foregoing objectives, this application uses the following technical solutions.

According to a first aspect, a communication method is provided. The method includes: A first device determines frequency domain resource for communication, and transmits a first signal on the frequency domain resource for communication. The first device is a device using a first communication manner, the frequency domain resource for communication belongs to a first frequency domain resource set, the first frequency domain resource set is a frequency domain resource set that is in an unlicensed frequency band and that is configured for use by the device using the first communication manner, a priority of the first communication manner is higher than a priority of a second communication manner, and frequency domain resource used by a device using the second communication manner is frequency domain resource other than the frequency domain resource for communication in the unlicensed frequency band.

It can be learned from the method according to the first aspect that there may be a priority relationship between different communication manners. For example, the priority of the first communication manner is higher than the priority of the second communication manner. In this case, compared with the device using the second communication manner, the device using the first communication manner may be configured with a dedicated frequency domain resource set in the unlicensed frequency band, or preferentially configured with a frequency domain resource set, for example, the first frequency domain resource set, in the unlicensed frequency band. In this way, the device using the first communication manner, for example, the first device, can directly transmit the signal on frequency domain resource in the first frequency domain resource set. This avoids access difficulty of the device, and meets a communication requirement of the device.

In a possible design solution, the frequency domain resource for communication is a part or all of frequency domain resource in the first frequency domain resource set. Specifically, the frequency domain resource for communication may be flexibly selected based on an actual requirement. This is not limited.

In a possible design solution, that a first device determines frequency domain resource for communication includes: The first device determines, by detecting the first frequency domain resource set, the frequency domain resource for communication. This can determine usage of a second device through detection, and reduce impact on signal transmission of the second device.

Optionally, that the first device determines, by detecting the first frequency domain resource set, the frequency domain resource for communication includes: If the first device determines, by detecting the first frequency domain resource set, that there is occupied frequency domain resource in the first frequency domain resource set, the first device determines whether remaining frequency domain resource meets a transmission requirement of the first signal, where the occupied frequency domain resource is the frequency domain resource used by the device using the second communication manner, and the remaining frequency domain resource is frequency domain resource other than the occupied frequency domain resource in the first frequency domain resource set.

If the remaining frequency domain resource meets the transmission requirement, the first device determines a part or all of the remaining frequency domain resource as the frequency domain resource for communication. In this case, the frequency domain resource for communication can still meet the transmission requirement of the first signal, to ensure that the first signal can be normally transmitted. Alternatively, if the remaining frequency domain resource does not meet the transmission requirement, the first device determines the remaining frequency domain resource and a part or all of the occupied frequency domain resource as the frequency domain resource for communication. In this case, the frequency domain resource for communication can meet the transmission requirement of the first signal, to ensure that the first signal can be normally transmitted.

Further, that the first device determines that there is occupied frequency domain resource in the first frequency domain resource set includes: The first device performs signal detection on each frequency domain resource in the first frequency domain resource set, to obtain a detection result corresponding to each frequency domain resource, where the detection result corresponding to each frequency domain resource indicates a signal pattern of a signal on the frequency domain resource; and if the frequency domain resource is used by the device using the second communication manner, the signal pattern of the signal on the frequency domain resource is a signal pattern of a signal corresponding to the second communication manner; or if the frequency domain resource is not used by the device using the second communication manner, the signal pattern of the signal on the frequency domain resource is not a signal pattern of a signal corresponding to the second communication manner.

In this way, the first device determines the occupied frequency domain resource based on the detection result corresponding to each frequency domain resource. For example, the first device may determine whether the signal pattern indicated by the detection result corresponding to each frequency domain resource is similar to a preset signal pattern of the signal corresponding to the second communication manner. If the signal pattern indicated by the detection result corresponding to each frequency domain resource is similar to the preset signal pattern of the signal corresponding to the second communication manner, the first device determines that there is the signal corresponding to the second communication manner on the frequency domain resource, and determines that the frequency domain resource is the occupied frequency domain resource. Otherwise, the first device determines that there is no signal corresponding to the second communication manner on the frequency domain resource, and determines that the frequency domain resource is not the occupied frequency domain resource. This accurately determines the occupied frequency domain resource.

In a possible design solution, the frequency domain resource in the first frequency domain resource set is consecutive frequency domain resource for use by the first device, or the frequency domain resource in the first frequency domain resource set is non-consecutive frequency domain resource for a more flexible frequency domain resource configuration. This is not limited.

In a possible design solution, the first communication manner is a SparkLink communication manner, and the second communication manner is a wireless fidelity Wi-Fi communication manner. That is, a priority of a SparkLink communication manner may be higher than a priority of a Wi-Fi communication manner. This preferentially ensures signal transmission of a SparkLink device.

In a possible design solution, that the priority of the first communication manner is higher than the priority of the second communication manner means that the first frequency domain resource set is preferentially allocated, in the unlicensed frequency band, to the device using the first communication manner, or the first frequency domain resource set is a dedicated frequency domain resource set of the device using the first communication manner in the unlicensed frequency band. This preferentially ensures signal transmission of a device using a higher-priority communication manner.

According to a second aspect, a communication method is provided. The method includes: A second device determines available frequency domain resource, and transmits a second signal on the available frequency domain resource. The second device is a device using a second communication manner, the device using the second communication manner is allowed to use frequency domain resource in an unlicensed frequency band, a priority of the second communication manner is lower than a priority of a first communication manner, and when both the second device and a device using the first communication manner are in a working state, the available frequency domain resource includes frequency domain resource in the unlicensed frequency band other than frequency domain resource used by the device using the first communication manner.

In a possible design solution, that a second device determines available frequency domain resource includes: The second device determines the available frequency domain resource based on frequency domain resource used by the second device in the unlicensed frequency band. This dynamically adjusts the frequency domain resource available to the second device.

Optionally, frequency domain resource, in the unlicensed frequency band, configured for use by the device using the first communication manner is a first frequency domain resource set, and the used frequency domain resource includes frequency domain resource other than the first frequency domain resource set in the unlicensed frequency band and a part or all of frequency domain resource in the first frequency domain resource set. That the second device determines the available frequency domain resource based on frequency domain resource used by the second device in the unlicensed frequency band includes: The second device determines whether the part or all of frequency domain resource is currently used by the device using the first communication manner.

If the part or all of frequency domain resource is not currently used by the device using the first communication manner, the second device determines the used frequency domain resource as the available frequency domain resource. That is, the second device may continue to occupy the frequency domain resource, to improve resource utilization.

Alternatively, if the part or all of frequency domain resource is all used by the device using the first communication manner, the second device determines the frequency domain resource other than the first frequency domain resource set in the unlicensed frequency band as the available frequency domain resource. That is, the second device should avoid a device using a higher-priority communication manner, for example, a first device, and no longer occupy the frequency domain resource, to avoid affecting signal transmission of the first device.

Alternatively, if the part or all of frequency domain resource is partially used by the device using the first communication manner, the second device determines the frequency domain resource other than the first frequency domain resource set in the unlicensed frequency band and frequency domain resource that is in the part or all of frequency domain resource and that is not used by the device using the first communication manner as the available frequency domain resource. That is, the second device should avoid a device using a higher-priority communication manner, for example, a first device, and no longer occupy the frequency domain resource that has been used by the first device, to avoid affecting signal transmission of the first device. However, for the frequency domain resource that is not used by the first device, the second device may still continue to occupy the frequency domain resource, to ensure signal transmission of the second device.

Further, that the second device determines that the part or all of frequency domain resource is all used by the device using the first communication manner includes: The second device determines whether first frequency domain resource in the first frequency domain resource set is currently used by the device using the first communication manner, where the first frequency domain resource is any frequency domain resource in the first frequency domain resource set. If the first frequency domain resource is currently used by the device using the first communication manner, the second device determines that the part or all of frequency domain resource is all currently used by the device using the first communication manner. Alternatively, if the first frequency domain resource is not currently used by the device using the first communication manner, the second device determines that the part or all of frequency domain resource is not currently used by the device using the first communication manner.

It may be understood that the first device may use frequency domain resource in a full frequency band. In this case, the second device may perform detection on one frequency domain resource in the first frequency domain resource set, to reduce detection overheads.

Further, that the second device determines whether first frequency domain resource in the first frequency domain resource set is currently used by the device using the first communication manner includes: The second device performs signal detection on the first frequency domain resource, to obtain a detection result corresponding to the first frequency domain resource, where the detection result indicates a signal pattern of a signal on the first frequency domain resource. If the signal pattern of the signal on the first frequency domain resource is a signal pattern of a signal corresponding to the first communication manner, the second device may accurately determine, based on the detection result, that the first frequency domain resource is currently used by the device using the first communication manner. Alternatively, if the signal pattern of the signal on the first frequency domain resource is not a signal pattern of a signal corresponding to the first communication manner, the second device may accurately determine, based on the detection result, that the first frequency domain resource is currently not used by the device using the first communication manner.

Further, that the second device determines that the part or all of frequency domain resource is partially used by the device using the first communication manner includes: The second device performs signal detection on each frequency domain resource in the part or all of frequency domain resource, to obtain a detection result corresponding to each frequency domain resource, where the detection result corresponding to each frequency domain resource indicates a signal pattern of a signal on the frequency domain resource; and if the frequency domain resource is used by the device using the first communication manner, the signal pattern of the signal on the frequency domain resource is a signal pattern of a signal corresponding to the first communication manner; or if the frequency domain resource is not used by the device using the first communication manner, the signal pattern of the signal on the frequency domain resource is not a signal pattern of a signal corresponding to the first communication manner. The second device determines, based on the detection result corresponding to each frequency domain resource, that the part or all of frequency domain resource is partially used by the device using the first communication manner.

It may be understood that the first device may not use the frequency domain resource in a full frequency band. In this case, the second device may perform signal detection in a targeted manner, to accurately determine which frequency domain resource is used by the device using the first communication manner and which frequency domain resource is not used by the device using the first communication manner.

Optionally, the frequency domain resource, in the unlicensed frequency band, configured for use by the device using the first communication manner is the first frequency domain resource set, and the used frequency domain resource includes frequency domain resource other than the first frequency domain resource set in the unlicensed frequency band. That the second device determines the available frequency domain resource based on frequency domain resource used by the second device in the unlicensed frequency band includes: The second device determines whether there is currently idle frequency domain resource in the first frequency domain resource set. If there is currently idle first frequency domain resource in the first frequency domain resource set, the second device determines the frequency domain resource other than the first frequency domain resource set in the unlicensed frequency band and the first frequency domain resource as the available frequency domain resource. This improves signal transmission performance. Alternatively, if there is currently no idle frequency domain resource in the first frequency domain resource set, the second device determines the used frequency domain resource as the available frequency domain resource. This maintains current signal transmission performance.

Further, that the second device determines that there is idle first frequency domain resource in the first frequency domain resource set includes: The second device determines, by performing detection on each frequency domain resource in the first frequency domain resource set, whether there is frequency domain resource, in the first frequency domain resource set, without a signal corresponding to the first communication manner within preset duration. If there is first frequency domain resource, in the first frequency domain resource set, without the signal corresponding to the first communication manner within preset duration, the second device determines that there is the idle first frequency domain resource in the first frequency domain resource set. This meets a requirement of the second device for transmitting the signal on frequency domain resource having a larger bandwidth.

In a possible design solution, that a second device determines available frequency domain resource includes: The second device periodically determines the available frequency domain resource, to quickly detect and avoid a higher-priority device. In addition, it can be ensured, by appropriately setting a periodicity, that the second device efficiently detects the available frequency domain resource.

In a possible design solution, the frequency domain resource in the first frequency domain resource set is consecutive frequency domain resource.

In a possible design solution, the first communication manner is a SparkLink communication manner, and the second communication manner is a wireless fidelity Wi-Fi communication manner.

In a possible design solution, that the priority of the first communication manner is higher than the priority of the second communication manner means that the first frequency domain resource set is preferentially allocated, in the unlicensed frequency band, to the device using the first communication manner, or the first frequency domain resource set is a dedicated frequency domain resource set of the device using the first communication manner in the unlicensed frequency band.

In addition, for technical effect of the method according to the second aspect, refer to the technical effect of the method according to the first aspect. Details are not described herein again.

According to a third aspect, a communication apparatus is provided. The apparatus includes a module configured to perform the method according to the first aspect, for example, a transceiver module and a processing module.

The processing module is configured to determine frequency domain resource for communication, and the transceiver module is configured to transmit a first signal on the frequency domain resource for communication. The communication apparatus according to the third aspect is a device using a first communication manner, the frequency domain resource for communication belongs to a first frequency domain resource set, the first frequency domain resource set is a frequency domain resource set that is in an unlicensed frequency band and that is configured for use by the device using the first communication manner, a priority of the first communication manner is higher than a priority of a second communication manner, and frequency domain resource used by a device using the second communication manner is frequency domain resource other than the frequency domain resource for communication in the unlicensed frequency band.

In a possible design solution, the frequency domain resource for communication is a part or all of frequency domain resource in the first frequency domain resource set. Specifically, the frequency domain resource for communication may be flexibly selected based on an actual requirement. This is not limited.

In a possible design solution, the processing module is further configured to determine, by detecting the first frequency domain resource set, the frequency domain resource for communication.

Optionally, the processing module is further configured to: if determining, by detecting the first frequency domain resource set, that there is occupied frequency domain resource in the first frequency domain resource set, the processing module is further configured to determine whether remaining frequency domain resource meets a transmission requirement of the first signal, where the occupied frequency domain resource is the frequency domain resource used by the device using the second communication manner, and the remaining frequency domain resource is frequency domain resource other than the occupied frequency domain resource in the first frequency domain resource set.

If the remaining frequency domain resource meets the transmission requirement, the processing module is further configured to determine a part or all of the remaining frequency domain resource as the frequency domain resource for communication. Alternatively, if the remaining frequency domain resource does not meet the transmission requirement, the processing module is further configured to determine the remaining frequency domain resource and a part or all of the occupied frequency domain resource as the frequency domain resource for communication.

Further, the processing module is further configured to perform signal detection on each frequency domain resource in the first frequency domain resource set, to obtain a detection result corresponding to each frequency domain resource, where the detection result corresponding to each frequency domain resource indicates a signal pattern of a signal on the frequency domain resource; and if the frequency domain resource is used by the device using the second communication manner, the signal pattern of the signal on the frequency domain resource is a signal pattern of a signal corresponding to the second communication manner; or if the frequency domain resource is not used by the device using the second communication manner, the signal pattern of the signal on the frequency domain resource is not a signal pattern of a signal corresponding to the second communication manner. The processing module is further configured to determine the occupied frequency domain resource based on the detection result corresponding to each frequency domain resource.

In a possible design solution, the frequency domain resource in the first frequency domain resource set is consecutive frequency domain resource, or the frequency domain resource in the first frequency domain resource set is non-consecutive frequency domain resource. This is not limited.

In a possible design solution, the first communication manner is a SparkLink communication manner, and the second communication manner is a wireless fidelity Wi-Fi communication manner.

In a possible design solution, that the priority of the first communication manner is higher than the priority of the second communication manner means that the first frequency domain resource set is preferentially allocated, in the unlicensed frequency band, to the device using the first communication manner, or the first frequency domain resource set is a dedicated frequency domain resource set of the device using the first communication manner in the unlicensed frequency band.

Optionally, the transceiver module may include a sending module and a receiving module. The sending module is configured to implement a sending function of the communication apparatus according to the third aspect, and the receiving module is configured to implement a receiving function of the communication apparatus according to the third aspect.

Optionally, the communication apparatus according to the third aspect may further include a storage module. The storage module stores a program or instructions. When the processing module executes the program or the instructions, the communication apparatus is enabled to perform the method according to the first aspect.

It may be understood that the communication apparatus according to the third aspect may be a terminal, like a SparkLink device, or may be a chip (system) or another part or component that may be disposed in the terminal, or may be an apparatus including the terminal. This is not limited in this application.

In addition, for technical effect of the apparatus according to the third aspect, refer to the technical effect of the method according to the first aspect. Details are not described herein again.

According to a fourth aspect, a communication apparatus is provided. The apparatus includes a module configured to perform the method according to the second aspect, for example, a transceiver module and a processing module.

The processing module is configured to determine available frequency domain resource, and the transceiver module is configured to transmit a second signal on the available frequency domain resource. The communication apparatus according to the fourth aspect is a device using a second communication manner, the device using the second communication manner is allowed to use frequency domain resource in an unlicensed frequency band, a priority of the second communication manner is lower than a priority of a first communication manner, and when both the communication apparatus according to the fourth aspect and a device using the first communication manner are in a working state, the available frequency domain resource includes frequency domain resource in the unlicensed frequency band other than frequency domain resource used by the device using the first communication manner.

In a possible design solution, the processing module is further configured to determine the available frequency domain resource based on frequency domain resource used by a second device in the unlicensed frequency band.

Optionally, frequency domain resource, in the unlicensed frequency band, configured for use by the device using the first communication manner is a first frequency domain resource set, and the used frequency domain resource includes frequency domain resource other than the first frequency domain resource set in the unlicensed frequency band and a part or all of frequency domain resource in the first frequency domain resource set. The processing module is further configured to determine whether the part or all of frequency domain resource is currently used by the device using the first communication manner.

If the part or all of frequency domain resource is not currently used by the device using the first communication manner, the processing module is further configured to determine the used frequency domain resource as the available frequency domain resource.

Alternatively, if the part or all of frequency domain resource is all used by the device using the first communication manner, the processing module is further configured to determine the frequency domain resource other than the first frequency domain resource set in the unlicensed frequency band as the available frequency domain resource.

Alternatively, if the part or all of frequency domain resource is partially used by the device using the first communication manner, the processing module is further configured to determine the frequency domain resource other than the first frequency domain resource set in the unlicensed frequency band and frequency domain resource that is in the part or all of frequency domain resource and that is not used by the device using the first communication manner as the available frequency domain resource.

Further, the processing module is further configured to determine whether first frequency domain resource in the first frequency domain resource set is currently used by the device using the first communication manner, where the first frequency domain resource is any frequency domain resource in the first frequency domain resource set. If the first frequency domain resource is currently used by the device using the first communication manner, the processing module is further configured to determine that the part or all of frequency domain resource is all currently used by the device using the first communication manner. Alternatively, if the first frequency domain resource is not currently used by the device using the first communication manner, the processing module is further configured to determine that the part or all of frequency domain resource is not currently used by the device using the first communication manner.

Further, that the second device determines whether first frequency domain resource in the first frequency domain resource set is currently used by the device using the first communication manner includes: The second device performs signal detection on the first frequency domain resource, to obtain a detection result corresponding to the first frequency domain resource, where the detection result indicates a signal pattern of a signal on the first frequency domain resource. If the signal pattern of the signal on the first frequency domain resource is a signal pattern of a signal corresponding to the first communication manner, the second device may accurately determine, based on the detection result, that the first frequency domain resource is currently used by the device using the first communication manner. Alternatively, if the signal pattern of the signal on the first frequency domain resource is not a signal pattern of a signal corresponding to the first communication manner, the second device may accurately determine, based on the detection result, that the first frequency domain resource is currently not used by the device using the first communication manner.

Further, the processing module is further configured to perform signal detection on each frequency domain resource in the part or all of frequency domain resource, to obtain a detection result corresponding to each frequency domain resource, where the detection result corresponding to each frequency domain resource indicates a signal pattern of a signal on the frequency domain resource; and if the frequency domain resource is used by the device using the first communication manner, the signal pattern of the signal on the frequency domain resource is a signal pattern of a signal corresponding to the first communication manner; or if the frequency domain resource is not used by the device using the first communication manner, the signal pattern of the signal on the frequency domain resource is not a signal pattern of a signal corresponding to the first communication manner. The processing module is further configured to determine, based on the detection result corresponding to each frequency domain resource, that the part or all of frequency domain resource is partially used by the device using the first communication manner.

Optionally, the frequency domain resource, in the unlicensed frequency band, configured for use by the device using the first communication manner is the first frequency domain resource set, and the used frequency domain resource includes frequency domain resource other than the first frequency domain resource set in the unlicensed frequency band. The processing module is further configured to determine whether there is currently idle frequency domain resource in the first frequency domain resource set. If there is currently idle first frequency domain resource in the first frequency domain resource set, the processing module is further configured to determine the frequency domain resource other than the first frequency domain resource set in the unlicensed frequency band and the first frequency domain resource as the available frequency domain resource. Alternatively, if there is currently no idle frequency domain resource in the first frequency domain resource set, the processing module is further configured to determine the used frequency domain resource as the available frequency domain resource.

Further, the processing module is further configured to determine, by performing detection on each frequency domain resource in the first frequency domain resource set, whether there is frequency domain resource, in the first frequency domain resource set, without a signal corresponding to the first communication manner within preset duration. If there is first frequency domain resource, in the first frequency domain resource set, without the signal corresponding to the first communication manner within preset duration, the processing module is further configured to determine that there is the idle first frequency domain resource in the first frequency domain resource set.

In a possible design solution, the processing module is further configured to periodically determine the available frequency domain resource.

In a possible design solution, the frequency domain resource in the first frequency domain resource set is consecutive frequency domain resource.

In a possible design solution, the first communication manner is a SparkLink communication manner, and the second communication manner is a wireless fidelity Wi-Fi communication manner.

In a possible design solution, that the priority of the first communication manner is higher than the priority of the second communication manner means that the first frequency domain resource set is preferentially allocated, in the unlicensed frequency band, to the device using the first communication manner, or the first frequency domain resource set is a dedicated frequency domain resource set of the device using the first communication manner in the unlicensed frequency band.

Optionally, the transceiver module may include a sending module and a receiving module. The sending module is configured to implement a sending function of the communication apparatus according to the fourth aspect, and the receiving module is configured to implement a receiving function of the communication apparatus according to the fourth aspect.

Optionally, the communication apparatus according to the fourth aspect may further include a storage module. The storage module stores a program or instructions. When the processing module executes the program or the instructions, the communication apparatus is enabled to perform the method according to the first aspect.

It may be understood that the communication apparatus according to the fourth aspect may be a terminal, like a Wi-Fi device, or may be a chip (system) or another part or component that may be disposed in the terminal, or may be an apparatus including the terminal. This is not limited in this application.

In addition, for technical effect of the apparatus according to the fourth aspect, refer to the technical effect of the method according to the second aspect. Details are not described herein again.

According to a fifth aspect, a communication apparatus is provided. The communication apparatus includes a processor. The processor is configured to perform the method according to any one of the possible implementations of the first aspect or the second aspect.

In a possible design solution, the communication apparatus according to the fifth aspect may further include a transceiver. The transceiver may be a transceiver circuit or an interface circuit. The transceiver may be used by the communication apparatus according to the fifth aspect to communicate with another communication apparatus.

In a possible design solution, the communication apparatus according to the fifth aspect may further include a memory. The memory and the processor may be integrated together, or may be disposed separately. The memory may be configured to store a computer program and/or data related to the method according to any one of the first aspect or the second aspect.

In embodiments of this application, the communication apparatus according to the fifth aspect may be the terminal according to any one of the first aspect or the second aspect, or a chip (system) or another part or component that may be disposed in the terminal, or an apparatus including the terminal.

In addition, for technical effect of the communication apparatus according to the fifth aspect, refer to the technical effect of the method according to any possible implementation of the first aspect or the second aspect. Details are not described herein again.

According to a sixth aspect, a communication apparatus is provided. The communication apparatus includes a processor. The processor is coupled to a memory, and the processor is configured to execute a computer program stored in the memory, so that the communication apparatus performs the method according to any one of the possible implementations of the first aspect or the second aspect.

In a possible design solution, the communication apparatus according to the sixth aspect may further include a transceiver. The transceiver may be a transceiver circuit or an interface circuit. The transceiver may be used by the communication apparatus according to the sixth aspect to communicate with another communication apparatus.

In embodiments of this application, the communication apparatus according to the sixth aspect may be the terminal according to any one of the first aspect or the second aspect, or a chip (system) or another part or component that may be disposed in the terminal, or an apparatus including the terminal.

In addition, for technical effect of the communication apparatus according to the sixth aspect, refer to the technical effect of the method according to any possible implementation of the first aspect or the second aspect. Details are not described herein again.

According to a seventh aspect, a communication apparatus is provided, and includes a processor and a memory. The memory is configured to store a computer program, and when the processor executes the computer program, the communication apparatus performs the method according to any one of the implementations of the first aspect or the second aspect.

In a possible design solution, the communication apparatus according to the seventh aspect may further include a transceiver. The transceiver may be a transceiver circuit or an interface circuit. The transceiver may be used by the communication apparatus according to the seventh aspect to communicate with another communication apparatus.

In embodiments of this application, the communication apparatus according to the seventh aspect may be the terminal according to any one of the first aspect or the second aspect, or a chip (system) or another part or component that may be disposed in the terminal, or an apparatus including the terminal.

In addition, for technical effect of the communication apparatus according to the seventh aspect, refer to the technical effect of the method according to any possible implementation of the first aspect or the second aspect. Details are not described herein again.

According to an eighth aspect, a communication apparatus is provided, and includes a processor. The processor is configured to: after being coupled to a memory and reading a computer program in the memory, perform, based on the computer program, the method according to any one of the implementations of the first aspect or the second aspect.

In a possible design solution, the communication apparatus according to the eighth aspect may further include a transceiver. The transceiver may be a transceiver circuit or an interface circuit. The transceiver may be used by the communication apparatus according to the eighth aspect to communicate with another communication apparatus.

In embodiments of this application, the communication apparatus according to the eighth aspect may be the network device according to any one of the first aspect or the second aspect, or a chip (system) or another part or component that may be disposed in the network device, or an apparatus including the network device.

In addition, for technical effect of the communication apparatus according to the eighth aspect, refer to the technical effect of the method according to any possible implementation of the first aspect or the second aspect. Details are not described herein again.

According to a ninth aspect, a computer-readable storage medium is provided, and includes a computer program or instructions. When the computer program or the instructions are run on a computer, the computer is enabled to perform the method according to any one of the possible implementations of the first aspect or the second aspect.

According to a tenth aspect, a computer program product is provided, and includes a computer program or instructions. When the computer program or the instructions are run on a computer, the computer is enabled to perform the method according to any one of the possible implementations of the first aspect or the second aspect.

### BRIEF DESCRIPTION OF DRAWINGS

FIG. 1 is a diagram of an architecture of a communication system according to an embodiment of this application;
FIG. 2 is a schematic flowchart of a communication method according to an embodiment of this application;
FIG. 3 is a diagram 1 of an application scenario of a communication method according to an embodiment of this application;
FIG. 4 is a diagram 2 of an application scenario of a communication method according to an embodiment of this application;
FIG. 5 is a diagram 3 of an application scenario of a communication method according to an embodiment of this application;
FIG. 6 is a diagram 1 of a structure of a communication apparatus according to an embodiment of this application; and
FIG. 7 is a diagram 2 of a structure of a communication apparatus according to an embodiment of this application.

### DESCRIPTION OF EMBODIMENTS

For ease of understanding, the following first describes technical terms in embodiments of this application.

### 1. Wi-Fi

Wi-Fi is a short-range communication technology widely used in wireless communication, and has advantages of convenient use and a high transmission rate. A Wi-Fi device may include a wireless access point (access point, AP), and a station (station, STA). The AP may be a central node of a network, or a node that provides a network service, for example, a wireless router. The STA may be a terminal connected to the AP, for example, a device like a mobile phone or a computer, and is configured to obtain a network service via the AP.

### 2. SparkLink

SparkLink is an emerging communication technology in wireless communication, and has advantages of ultra-low latency, ultra-high reliability, and precise synchronization, to meet ultimate performance requirements of application scenarios such as a smart car, a smart home, a smart terminal, and smart manufacturing. A SparkLink device may include a G node and a T node. The G node is a device that performs a scheduling function, namely, a central node. The T node is a device that performs a scheduled function, namely, a user node. The G node may schedule time-frequency resources of a plurality of T nodes by using a central scheduling mechanism, to reduce a resource collision probability, and improve communication performance.

### 3. LBT

LBT is a channel access mechanism widely used in wireless communication. An LBT mechanism requires that a device needs to monitor a channel before performing data transmission, to evaluate whether the channel is idle. This ensures that data transmission is performed when the channel is idle, and therefore avoids a data conflict. Typical devices using the LBT mechanism have a Wi-Fi device and a SparkLink device. When the Wi-Fi device and the SparkLink device share an unlicensed frequency band, both the Wi-Fi device and the SparkLink device need to preempt frequency domain resource in the unlicensed frequency band by using the LBT mechanism. For example, if the Wi-Fi device occupies the frequency domain resource in the unlicensed frequency band earlier than the SparkLink device, the SparkLink device can perform signal transmission on the frequency domain resource only after the frequency domain resource is idle.

However, when the Wi-Fi device and the SparkLink device preempt the frequency domain resource in the unlicensed spectrum by using the LBT mechanism, it may cause access difficulty of the device, and fail to meet a communication requirement of the device. For example, when a SparkLink device needs to transmit data, access may fail because the SparkLink device cannot preempt frequency domain resource by using an LBT mechanism. Consequently, the data cannot be sent in time, and a communication requirement cannot be met.

It may be understood that a Wi-Fi technology supports free contention for frequency domain resource in an unlicensed frequency band by all Wi-Fi devices (including an AP and a STA), and a SparkLink technology supports free contention for frequency domain resource in an unlicensed frequency band by G nodes. In this case, a quantity of G nodes may be far less than a quantity of Wi-Fi devices. Consequently, it is difficult for the G node to preempt the frequency domain resource, and compared with that of the Wi-Fi device, a device access of the SparkLink device is more difficult, and a communication requirement of the device is more difficult to meet.

For the foregoing technical problems, embodiments of this application provide the following technical solutions, to avoid access difficulty of a device, and meet a communication requirement of the device when a signal is transmitted on frequency domain resource in an unlicensed frequency band.

The following describes the technical solutions of this application with reference to accompanying drawings.

The technical solutions in embodiments of this application are applied to various communication systems, for example, a Wi-Fi system and a SparkLink system, or applied to any other possible communication system, for example, a vehicle to everything (vehicle to everything, V2X) communication system, a device-to-device (device-to-device, D2D) communication system, an internet of vehicles communication system, a 4th generation (4th generation, 4G) mobile communication system, like a long term evolution (long term evolution, LTE) system, a worldwide interoperability for microwave access (worldwide interoperability for microwave access, WiMAX) communication system, a 5th generation (5th generation, 5G), like a new radio (new radio, NR) system, and a future communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, the terms such as "example" or "for example" are used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

In embodiments of this application, terms "information (information)", "signal (signal)", "message (message)", "channel (channel)", and "signaling (signaling)" may sometimes be interchangeably used. It should be noted that meanings expressed by the terms are matchable when differences of the terms are not emphasized. The terms "of (of)", "corresponding, relevant (corresponding, relevant)", and "corresponding (corresponding)" may sometimes be interchangeably used. It should be noted that meanings expressed by the terms are matchable when differences of the terms are not emphasized. In addition, "/" mentioned in this application may indicate an "or" relationship.

It may be understood that, in this application, an "indication" may include a direct indication, an indirect indication, an explicit indication, and an implicit indication. When a piece of indication information is described as indicating A, it may be understood that the indication information carries A, directly indicates A, or indirectly indicates A.

In this application, information indicated by the indication information is referred to as to-be-indicated information. In a specific implementation process, there are many manners of indicating the to-be-indicated information. For example, the manners include but are not limited to a manner in which the to-be-indicated information, for example, the to-be-indicated information itself or an index of the to-be-indicated information, may be directly indicated, or a manner in which the to-be-indicated information may be indirectly indicated by indicating other information. There is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that are pre-agreed on (for example, stipulated in a protocol), to reduce indication overheads to some extent.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmitting end device by sending configuration information to a receiving end device.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

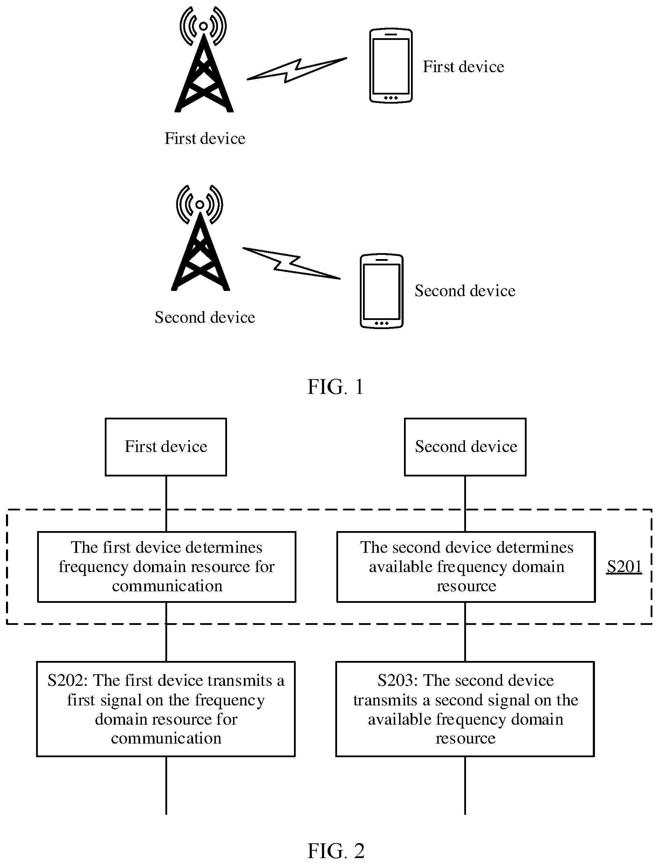

For ease of understanding embodiments of this application, a communication system shown in FIG. 1 is first used as an example to describe in detail a communication system to which an embodiment of this application is applicable. For example, FIG. 1 is a diagram of an architecture of a communication system to which a communication method according to an embodiment of this application is applicable.

As shown in FIG. 1, the communication system is applied to communication in scenarios such as a smart car, a smart home, a smart terminal, and smart manufacturing, and includes a first device and a second device.

The first device may be a terminal, for example, may be a terminal having a receiving and sending function, or may be a chip or a chip system that may be disposed in the terminal. The terminal may also be referred to as user equipment (user equipment, UE), an access terminal, a subscriber unit (subscriber unit), a subscriber station, a mobile station (mobile station, MS), a remote station, a remote terminal, a mobile device, a user terminal, a wireless communication device, a user agent, or a user apparatus. The terminal in embodiments of this application may be a mobile phone (mobile phone), a cellular phone (cellular phone), a smartphone (smartphone), a tablet computer (Pad), a wireless data card, a personal digital assistant (personal digital assistant, PDA), a wireless modem (modem), a handheld device (handset), a laptop computer (laptop computer), a machine type communication (machine type communication, MTC) terminal, a computer having a wireless sending and receiving function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a road side unit (road side unit, RSU) that has a terminal function, or the like. Alternatively, the terminal in this application may be an in-vehicle module, an in-vehicle subassembly, an in-vehicle part, an in-vehicle chip, or an in-vehicle unit that is built in a vehicle as one or more parts or units.

There may be a plurality of first devices, and different first devices may communicate with each other in a first communication manner. The first communication manner may be a SparkLink communication manner, namely, a communication manner that supports the SparkLink protocol, or a communication manner specified by the SparkLink protocol. When the first communication manner is for communication, the first device may also be referred to as a device using the first communication manner, namely, a SparkLink device, for example, may be a G node or a T node. This is not limited. Communication between different first devices may also be understood as communication between a G node and a T node. The first communication manner may also be, for example, a communication manner in which a central node exists, a short-range communication manner, a low-latency communication manner, a low-power consumption communication manner, a large-bandwidth communication manner, or another higher-priority communication manner. The first device may be a device using a corresponding communication manner. The first device may also use any other possible communication manner, for example, Bluetooth or near field communication (near field communication, NFC). In this case, the first device may also be referred to as a Bluetooth device. This is not limited.

Alternatively, the second device may be a terminal. For details, refer to the foregoing related descriptions. Details are not described again. There may be a plurality of second devices, and different second devices may communicate with each other in a second communication manner. The second communication manner may be a Wi-Fi communication manner, namely, a communication manner that supports the Wi-Fi protocol, or a communication manner specified by the Wi-Fi protocol. When the second communication manner is for communication, the second device may also be referred to as a device using the second communication manner, namely, a Wi-Fi device, for example, may be an AP or a STA. This is not limited. Communication between different second devices may also be understood as communication between different APs, or communication between an AP or a STA. The second device may also use any other possible communication manner, for example, Bluetooth. In this case, the second device may also be referred to as a Bluetooth device. This is not limited.

In this embodiment of this application, there may be a priority relationship between different communication manners. For example, a priority of the first communication manner is higher than a priority of the second communication manner. In this case, compared with the device using the second communication manner, the device using the first communication manner may be configured with a dedicated frequency domain resource set in an unlicensed frequency band, or preferentially configured with a frequency domain resource set, for example, a first frequency domain resource set, in an unlicensed frequency band. In this way, the device using the first communication manner, for example, the first device, can directly transmit a signal on frequency domain resource in the first frequency domain resource set. This avoids access difficulty of the device, and meets a communication requirement of the device.

For ease of understanding, the following specifically describes an interaction procedure between network elements/devices in the foregoing communication system by using method embodiments with reference to FIG. 2 to FIG. 5. The communication method provided in embodiments of this application is applicable to the foregoing communication system, and is specifically applied to various scenarios mentioned in the foregoing communication system. The following provides specific descriptions.

FIG. 2 is a schematic flowchart 1 of a communication method according to an embodiment of this application. The communication method is applicable to the foregoing communication system, and relates to interaction between different first devices and interaction between different second devices.

Specifically, as shown in FIG. 2, a procedure of the communication method is as follows.

S201: A first device determines frequency domain resource for communication, and a second device determines available frequency domain resource.

The first device may be a device using a first communication manner, for example, may be a SparkLink device, or may be any possible device. For details, refer to the foregoing related descriptions. Details are not described again.

The frequency domain resource for communication may belong to a first frequency domain resource set, for example, may be a part or all of frequency domain resource in the first frequency domain resource set. Specifically, the frequency domain resource for communication may be flexibly selected based on an actual requirement. This is not limited. The first frequency domain resource set may be a frequency domain resource set in an unlicensed frequency band. For example, the unlicensed frequency band may be a frequency band that is not separately licensed or specified for use by a device using a communication manner. The unlicensed frequency band may be an unlicensed frequency band of 2.4 Giga Hertz (GHz), or an unlicensed frequency band of 5 GHz, such as from 5150 megahertz (MHz) to 5350 MHz or from 5725 MHz to 5850 MHz, or may be an unlicensed frequency band of future 6 GHz. This is not limited. The first frequency domain resource set may be considered as a set of a segment of consecutive frequency domain resource or a set of a plurality of segments of non-consecutive frequency domain resource in the unlicensed frequency band. For example, the first frequency domain resource set may include a plurality of frequency domain resources. The plurality of frequency domain resources may be consecutive frequency domain resource for use by the first device, or may be non-consecutive frequency domain resource for a more flexible frequency domain resource configuration. This is not limited. Each frequency domain resource may correspond to one unit bandwidth, for example, 20 MHz, 15 MHz, 12 MHz, or 10 MHz. This is not limited. It may be understood that one unit bandwidth may also be understood as a bandwidth occupied by one channel. Therefore, one frequency domain resource may also be considered as one channel, and the first frequency domain resource set may also be understood as including a plurality of channels. Altenatively, one unit bandwidth may be understood as a sub-channel bandwidth specified in a communication manner, for example, a sub-channel bandwidth specified in the Wi-Fi protocol or the SparkLink protocol, or a channel bandwidth obtained through radio frequency division specified by the Radio Regulatory Commission. This is not limited.

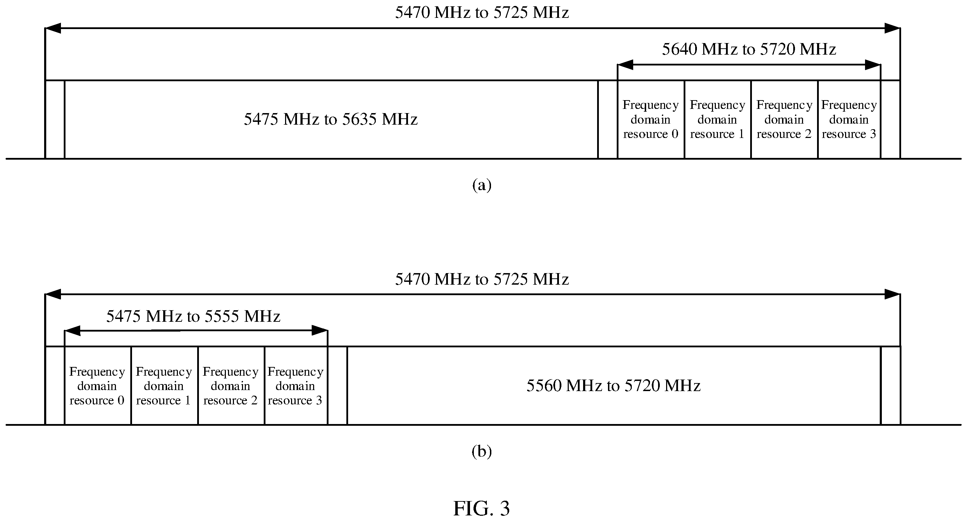

For example, the unlicensed frequency band is from 5470 MHz to 5725 MHz. As shown in (a) in FIG. 3, the first frequency domain resource set may be a consecutive 80 MHz frequency band with higher frequencies, for example, from 5640 MHz to 5720 MHz. 5470 MHz to 5475 MHz, 5635 MHz to 5640 MHz, and 5720 MHz to 5725 MHz each may be a guard band of 5 MHz, or in other words, a null band, to prevent a signal on the first frequency domain resource set from being interfered with by a signal on another frequency band. Alternatively, as shown in (b) in FIG. 3, the first frequency domain resource set may be a consecutive 80 MHz frequency band with lower frequencies, for example, from 5475 MHz to 5555 MHz. 5470 MHz to 5475 MHz, 5555 MHz to 5560 MHz, and 5720 MHz to 5725 MHz each may be a guard band of 5 MHz. On this basis, for example, a channel bandwidth of any frequency domain resource is 20 MHz, that is, the foregoing unit bandwidth is 20 MHz. The first frequency domain resource set may include four frequency domain resources, which are denoted as frequency domain resource 0 to frequency domain resource 3. The frequency domain resource for communication may be any one or more of the four frequency domain resources.

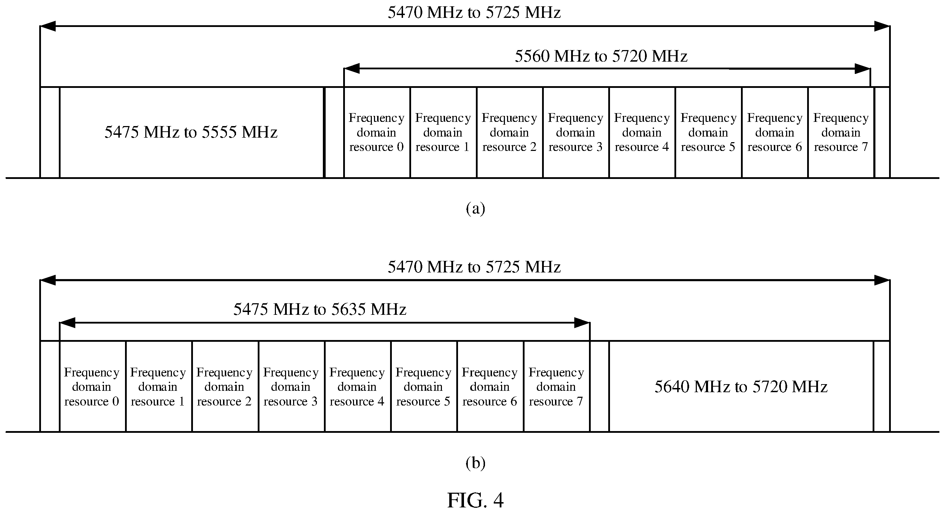

Alternatively, for example, the unlicensed frequency band is from 5470 MHz to 5725 MHz. As shown in (a) in FIG. 4, the first frequency domain resource set may be a consecutive 160 MHz frequency band with higher frequencies, for example, from 5560 MHz to 5720 MHz. 5470 MHz to 5475 MHz, 5555 MHz to 5560 MHz, and 5720 MHz to 5725 MHz each may be a guard band of 5 MHz. Alternatively, as shown in (b) in FIG. 4, the first frequency domain resource set may be a consecutive 160 MHz frequency band with lower frequencies, for example, from 5475 MHz to 5635 MHz. 5470 MHz to 5475 MHz, 5635 MHz to 5640 MHz, and 5720 MHz to 5725 MHz each may be a guard band of 5 MHz. On this basis, for example, a channel bandwidth of any frequency domain resource is 20 MHz. The first frequency domain resource set may include eight frequency domain resources, which are denoted as frequency domain resource 0 to frequency domain resource 7. The frequency domain resource for communication may be any one or more of the eight frequency domain resources.

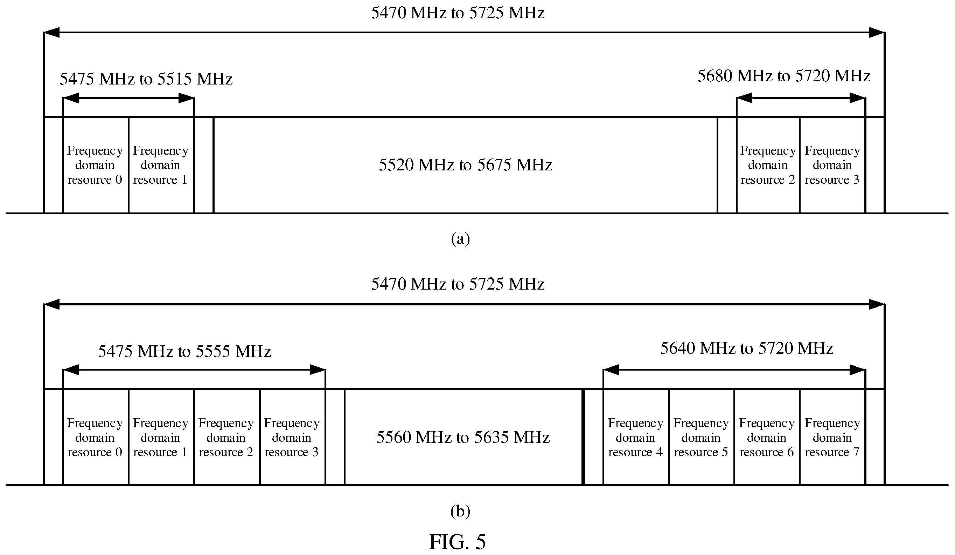

Alternatively, for example, the unlicensed frequency band is from 5470 MHz to 5725 MHz. As shown in (a) in FIG. 5, the first frequency domain resource set may be two 40 MHz frequency bands that are not consecutive, and the two frequency bands are located at a higher-frequency location and a lower-frequency location of the unlicensed frequency band, for example, from 5475 MHz to 5515 MHz and from 5680 MHz to 5720 MHz. 5470 MHz to 5475 MHz, 5515 MHz to 5520 MHz, 5675 MHz to 5680 MHz, and 5720 MHz to 5725 MHz each may be a guard band of 5 MHz. On this basis, for example, a channel bandwidth of any frequency domain resource is 20 MHz. The first frequency domain resource set may include four frequency domain resources, which are denoted as frequency domain resource 0 to frequency domain resource 3. Alternatively, as shown in (b) in FIG. 5, the first frequency domain resource set may be two 80 MHz frequency bands that are not consecutive and that are located at a higher-frequency location and a lower-frequency location of the unlicensed frequency band, for example, from 5475 MHz to 5555 MHz and from 5640 MHz to 5720 MHz. 5470 MHz to 5475 MHz, 5555 MHz to 5560 MHz, 5635 MHz to 5640 MHz, and 5720 MHz to 5725 MHz each may be a guard band of 5 MHz. On this basis, for example, a channel bandwidth of any frequency domain resource is 20 MHz. The first frequency domain resource set may include eight frequency domain resources, which are denoted as frequency domain resource 0 to frequency domain resource 7. The frequency domain resource for communication may be any one or more of the eight frequency domain resources.

It may be understood that, that the first frequency domain resource set is a consecutive or non-consecutive 80 MHz bandwidth, or that the first frequency domain resource set is a consecutive or non-consecutive 160 MHz bandwidth is merely some examples. For example, the first frequency domain resource set may be any possible bandwidth. For example, the first frequency domain resource set may be a consecutive or non-consecutive 40 MHz bandwidth or a consecutive or non-consecutive 20 MHz bandwidth. This is not limited. In addition, that the unlicensed frequency band includes guard bands is merely an example. For example, the unlicensed frequency band may not include guard bands. This is not limited.

The second device may be a device using a second communication manner, for example, may be a Wi-Fi device, or may be any possible device. For details, refer to the foregoing related descriptions. Details are not described again.

Devices using different communication manners may share an unlicensed frequency band. For example, the device using the first communication manner and the device using the second communication manner may share the unlicensed frequency band. However, because priorities of different communication manners are different, for example, a priority of the first communication manner is higher than a priority of the second communication manner, that is, a priority of a SparkLink communication manner is higher than a priority of a Wi-Fi device, a device using a higher-priority communication manner, for example, the device using the first communication manner, can preferentially use the frequency domain resource in the unlicensed frequency band. This preferentially ensures signal transmission of the device using the higher-priority communication manner, for example, signal transmission of a SparkLink device.

For example, the first frequency domain resource set may be a frequency domain resource set that is in the unlicensed frequency band and that is configured for use by the device using the first communication manner, or in other words, the first frequency domain resource set in the unlicensed frequency band needs to be preferentially allocated to the device using the first communication manner. Alternatively, the first frequency domain resource set may be a frequency domain resource set dedicated to the device using the first communication manner in the unlicensed frequency band. This preferentially ensures signal transmission of the device using the higher-priority communication manner. In this case, when the device using the first communication manner and the device using the second communication manner simultaneously work, frequency domain resource used by the device using the second communication manner may be frequency domain resource in the unlicensed frequency band other than the frequency domain resource for communication. That is, although the device using the second communication manner may also be allowed to use all of frequency domain resource in the unlicensed frequency band, for example, when the device using the first communication manner does not use frequency domain resource in the first frequency domain resource set, the device using the second communication manner may use all of the frequency domain resource in the unlicensed frequency band, for example, contend, by using an LBT mechanism, for using all of the frequency domain resource in the unlicensed frequency band. However, if the device using the first communication manner starts to use the frequency domain resource in the first frequency domain resource set, the device using the second communication manner should avoid the device using the first communication manner. For example, the device using the second communication manner cannot use the frequency domain resource currently used by the device using the first communication manner. In other words, avoidance is performed in the first frequency domain resource set. In this case, for resource other than the first frequency domain resource set in the unlicensed frequency band, the device using the second communication manner and the device using the first communication manner may contend, by using an LBT mechanism, for using the frequency domain resource.

However, frequency domain resource currently not used by the device using the first communication manner in the unlicensed frequency band may be used.

It may be understood that priorities of different communication manners may be defined by a protocol or a regulation. For example, it is defined in the protocol that a priority of a SparkLink communication manner is higher than a priority of a Wi-Fi device. Alternatively, a user may configure the priorities based on a use requirement. For example, that a priority of a SparkLink communication manner is higher than a priority of a Wi-Fi device is configured and defined. This is not specifically limited in this application. In addition, the foregoing frequency domain resource allocation usage manner is merely an example, and is not used as a limitation. For example, regardless of whether the device using the first communication manner uses the frequency domain resource in the first frequency domain resource set, the device using the second communication manner may be allowed to use only the frequency domain resource other than the first frequency domain resource set in the unlicensed frequency band, and the frequency domain resource may also be referred to as non-dedicated frequency domain resource.

For example, as shown in (a) in FIG. 3, 5640 MHz to 5720 MHz (including the frequency domain resource 0 to the frequency domain resource 3) is a dedicated frequency domain resource set of a SparkLink device. When the SparkLink device does not use the frequency domain resource 0 to the frequency domain resource 3, a Wi-Fi device may be allowed to use frequency domain resource from 5470 MHz to 5725 MHz. When the SparkLink device starts to use the frequency domain resource 0 to the frequency domain resource 3, the Wi-Fi device may use the remaining frequency domain resource from 5475 MHz to 5635 MHz by using an LBT mechanism. Alternatively, as shown in (b) in FIG. 3, the frequency domain resource 0 to the frequency domain resource 3 are a dedicated frequency domain resource set of a SparkLink device. When the SparkLink device does not use the frequency domain resource 0 to the frequency domain resource 3, a Wi-Fi device may be allowed to use frequency domain resource from 5470 MHz to 5725 MHz. When the SparkLink device starts to use frequency domain resource of the frequency domain resource 1 to the frequency domain resource 3, the Wi-Fi device may use the frequency domain resource 0 and the remaining frequency domain resource from 5560 MHz to 5720 MHz by using an LBT mechanism.

It may be understood that when there is a protection resource in the unlicensed frequency band, namely, in the case mentioned in the example shown in FIG. 3, the Wi-Fi device may not use the protection resource, or the Wi-Fi device may use the protection resource. As shown in (a) in FIG. 3, the Wi-Fi device uses the remaining frequency domain resource from 5475 MHz to 5635 MHz and from 5720 MHz to 5725 MHz by using the LBT mechanism. For ease of understanding, the following provides description by using an example in which the Wi-Fi device does not use the protection resource. For a case in which the Wi-Fi device uses the protection resource, refer to the description for understanding. Details are not described again.

Alternatively, as shown in (a) in FIG. 4, 5560 MHz to 5720 MHz (including the frequency domain resource 0 to the frequency domain resource 7) is a dedicated frequency domain resource set of a SparkLink device. When the SparkLink device does not use the frequency domain resource 0 to 7, a Wi-Fi device may be allowed to use frequency domain resource from 5470 MHz to 5725 MHz. When the SparkLink device starts to use the frequency domain resource 0 to the frequency domain resource 7, the Wi-Fi device may use the remaining frequency domain resource from 5475 MHz to 5555 MHz by using an LBT mechanism. Alternatively, as shown in (b) in FIG. 4, the frequency domain resource 0 to the frequency domain resource 7 are a dedicated frequency domain resource set of a SparkLink device. When the SparkLink device does not use the frequency domain resource 0 to the frequency domain resource 7, a Wi-Fi device may be allowed to use frequency domain resource from 5470 MHz to 5725 MHz. When the SparkLink device starts to use the frequency domain resource 0 to the frequency domain resource 7, the Wi-Fi device may use the frequency domain resource 0 and the remaining frequency domain resource from 5640 MHz to 5720 MHz by using an LBT mechanism.

Alternatively, as shown in (a) in FIG. 5, 5475 MHz to 5515 MHz and 5680 MHz to 5720 MHz (including the frequency domain resource 0 to the frequency domain resource 3) are a dedicated frequency domain resource set of a SparkLink device. When the SparkLink device does not use the frequency domain resource 0 to the frequency domain resource 3, a Wi-Fi device may be allowed to use frequency domain resource from 5470 MHz to 5725 MHz. When the SparkLink device starts to use the frequency domain resource 0 to the frequency domain resource 3, the Wi-Fi device may use the remaining frequency domain resource from 5520 MHz to 5675 MHz by using an LBT mechanism. Alternatively, as shown in (b) in FIG. 5, 5475 MHz to 5555 MHz and 5640 MHz to 5720 MHz (including the frequency domain resource 0 to the frequency domain resource 7) are a dedicated frequency domain resource set of a SparkLink device. When the SparkLink device does not use the frequency domain resource 0 to the frequency domain resource 7, a Wi-Fi device may be allowed to use frequency domain resource from 5470 MHz to 5725 MHz. When the SparkLink device starts to use the frequency domain resource 0 to the frequency domain resource 2 and the frequency domain resource 4 to the frequency domain resource 7, the Wi-Fi device may use the frequency domain resource 3 and the remaining frequency domain resource from 5560 MHz to 5635 MHz by using an LBT mechanism.

In this embodiment of this application, because the priority of the first communication manner is higher than the priority of the second communication manner, when determining the frequency domain resource for communication, the first device may not consider which frequency domain resource is used by the second device, and directly determine, from the first frequency domain resource set, the frequency domain resource for communication; or may consider which frequency domain resource is used by the second device. This is not limited. However, when determining the available frequency domain resource, the second device usually needs to consider which frequency domain resource is used by the first device, to avoid that the available frequency domain resource includes the frequency domain resource currently used by the first device. The following provides detailed descriptions.

(1) The first device determines the frequency domain resource for communication.

In a possible manner, if the first device does not consider which frequency domain resource is used by the second device, the first device may directly determine, from the first frequency domain resource set, the frequency domain resource for communication. For example, the first device may consider by default that all of frequency domain resource in the first frequency domain resource set is for communication. That is, the frequency domain resource for communication is all of frequency domain resource in the first frequency domain resource set. Alternatively, the first device may determine, from the first frequency domain resource set based on a transmission requirement of a to-be-sent signal, for example, a first signal, frequency domain resource that meets the transmission requirement of the first signal. That is, the frequency domain resource for communication is frequency domain resource that is in the first frequency domain resource set and that meets a transmission requirement of a first signal. Optionally, the frequency domain resource that meets the transmission requirement of the first signal may include frequency domain resource (denoted as specified frequency domain resource) whose frequency domain location is close to a frequency domain location of a non-dedicated frequency domain resource. For example, a guard band may be spaced between the frequency domain location of the specified frequency domain resource and the frequency domain location of the non-dedicated frequency domain resource, so that the second device detects whether the frequency domain resource in the first frequency domain resource set is used by the first device. Alternatively, when there is no protection resource on the unlicensed frequency band, the frequency domain location of the specified frequency domain resource may be adjacent to the frequency domain location of the non-dedicated frequency domain resource.

For example, as shown in FIG. 3, a transmission requirement of a first signal indicates that a bandwidth for transmitting the first signal is 40 MHz (two frequency domain resources are required). A SparkLink device may determine, based on the transmission requirement of the first signal, that the consecutive frequency domain resource 0 and frequency domain resource 1 are frequency domain resource for communication, or the non-consecutive frequency domain resource 0 and frequency domain resource 3 are frequency domain resource for communication. This is not limited. Alternatively, a transmission requirement of a first signal indicates that a bandwidth for transmitting the first signal is 60 MHz (three frequency domain resources are required). A SparkLink device may determine, based on the transmission requirement of the first signal, the frequency domain resource 0 to the frequency domain resource 3 as frequency domain resource for communication. In this case, the frequency domain resource 0 is a specified frequency domain resource.

In another possible manner, if the first device considers which frequency domain resource is used by the second device, the first device may determine, by detecting the first frequency domain resource set, the frequency domain resource for communication. This can determine usage of the second device through detection, and reduce impact on signal transmission of the second device.

Specifically, the first device may determine, by detecting the first frequency domain resource set, whether there is occupied frequency domain resource in the first frequency domain resource set. The occupied frequency domain resource may be the frequency domain resource used by the device using the second communication manner. For example, the first device may perform signal detection on each frequency domain resource in the first frequency domain resource set, to obtain a detection result corresponding to each frequency domain resource. The detection result corresponding to each frequency domain resource may indicate a signal pattern or a signal feature of a signal on the frequency domain resource. If frequency domain resource in the first frequency domain resource set is used by the second device, the frequency domain resource usually has a signal corresponding to the second communication manner, and a signal pattern of a signal on the frequency domain resource is a signal pattern of the signal corresponding to the second communication manner. If frequency domain resource in the first frequency domain resource set is not used by the second device, the frequency domain resource usually does not have a signal corresponding to the second communication manner, and a signal pattern of a signal on the frequency domain resource is not a signal pattern of the signal corresponding to the second communication manner. Therefore, the first device can determine the occupied frequency domain resource based on the detection result corresponding to each frequency domain resource. For example, the first device may determine whether the signal pattern indicated by the detection result corresponding to each frequency domain resource is similar to the preset signal pattern of the signal corresponding to the second communication manner. If the signal pattern indicated by the detection result corresponding to each frequency domain resource is similar to the preset signal pattern of the signal corresponding to the second communication manner, the first device determines that there is the signal corresponding to the second communication manner on the frequency domain resource, and determines that the frequency domain resource is the occupied frequency domain resource. Otherwise, the first device determines that there is no signal corresponding to the second communication manner on the frequency domain resource, and determines that the frequency domain resource is not the occupied frequency domain resource. This accurately determines the occupied frequency domain resource.

If the first device determines, by detecting the first frequency domain resource set, an unoccupied frequency domain resource in the first frequency domain resource set, the first device may directly determine, from the first frequency domain resource set, the frequency domain resource for communication. For a specific implementation principle, refer to the foregoing related descriptions. Details are not described again.

If the first device determines, by detecting the first frequency domain resource set, that there is the occupied frequency domain resource in the first frequency domain resource set, the first device may determine whether the remaining frequency domain resource meets a transmission requirement of a first signal, where the remaining frequency domain resource is frequency domain resource in the first frequency domain resource set other than the occupied frequency domain resource.

In this case, if the remaining frequency domain resource meets the transmission requirement of the first signal, the first device may determine a part or all of the remaining frequency domain resource as the frequency domain resource for communication. The frequency domain resource for communication can still meet the transmission requirement of the first signal, to ensure that the first signal can be normally transmitted.

For example, as shown in FIG. 3, the frequency domain resource 0 is occupied frequency domain resource, and the remaining frequency domain resource is the frequency domain resource 1 to the frequency domain resource 3. A transmission requirement of a first signal indicates that a bandwidth for transmitting the first signal is 40 MHz (two frequency domain resources are required). A SparkLink device may determine the frequency domain resource 1 to the frequency domain resource 3 as frequency domain resource for communication, that is, determine all of the remaining frequency domain resource as the frequency domain resource for communication. Altenatively, a SparkLink device may determine the consecutive frequency domain resource 1 and frequency domain resource 2 as frequency domain resource for communication, or determine non-consecutive frequency domain resource 1 and frequency domain resource 3 as frequency domain resource for communication, that is, a part of the remaining frequency domain resource is determined as frequency domain resource for communication, and the frequency domain resource for communication can still meet the transmission requirement of the first signal.

Alternatively, if the remaining frequency domain resource does not meet the transmission requirement of the first signal, the first device may determine the remaining frequency domain resource and a part or all of the occupied frequency domain resource as the frequency domain resource for communication. This ensures that the frequency domain resource for communication can meet the transmission requirement of the first signal, and ensures that the first signal can be normally transmitted.

For example, as shown in FIG. 3, the frequency domain resource 0 and the frequency domain resource 1 are occupied frequency domain resource, and the remaining frequency domain resource is the frequency domain resource 2 and the frequency domain resource 3. A transmission requirement of a first signal indicates that a bandwidth for transmitting the first signal is 60 MHz (three frequency domain resources are required). A SparkLink device may determine the consecutive frequency domain resource 1 to frequency domain resource 3 as frequency domain resource for communication; or may determine the consecutive frequency domain resource 0 and frequency domain resource 3 as frequency domain resource for communication; or may determine non-consecutive frequency domain resource 0, frequency domain resource 2, and frequency domain resource 3 as frequency domain resource for communication. This is not limited.

It may be understood that, if the transmission requirement of the first signal can be met by adding a part of the occupied frequency domain resource to the remaining frequency domain resource, the first device may choose to determine the remaining frequency domain resource and the part of the occupied frequency domain resource as the frequency domain resource for communication. In this case, the others of the occupied frequency domain resource, to be specific, the frequency domain resource that is not determined as the frequency domain resource for communication, may still be used by the second device. This can reduce impact on signal transmission of the second device on the basis of ensuring signal transmission of the first device. Alternatively, if the transmission requirement of the first signal can be met by adding a part of the occupied frequency domain resource to the remaining frequency domain resource, the first device may still choose to determine the remaining frequency domain resource and all of the occupied frequency domain resource as the frequency domain resource for communication. This is not limited.

(2) The second device determines the available frequency domain resource.

The second device may periodically determine the available frequency domain resource, to quickly detect and avoid a higher-priority device. In addition, it can be ensured, by appropriately setting a periodicity, that the second device efficiently detects the available frequency domain resource. For example, in a periodicity, the second device may determine available frequency domain resource, namely, available frequency domain resource in the periodicity, based on frequency domain resource used by the second device in an unlicensed frequency band, to dynamically adjust the frequency domain resource available to the second device.

In a possible manner, the used frequency domain resource may include frequency domain resource other than the first frequency domain resource set in the unlicensed frequency band (denoted as non-dedicated frequency domain resource), and a part or all of frequency domain resource in the first frequency domain resource set. That is, the second device occupies a part or all of frequency domain resource (denoted as occupied frequency domain resource) in the first frequency domain resource set. The second device may determine whether the occupied frequency domain resource is currently used by the device using the first communication manner.

Optionally, the first device may use frequency domain resource in a full frequency band. That is, if the first device needs to transmit a signal, the first device may transmit the signal on all of the frequency domain resource in the first frequency domain resource set. In this case, the second device may perform detection on frequency domain resource in the first frequency domain resource set. This reduces detection overheads. If the detected frequency domain resource is used by the first device, the occupied frequency domain resource is also used by the first device.

For example, the second device may determine whether first frequency domain resource in the first frequency domain resource set is currently used by the device using the first communication manner. The first frequency domain resource may be any frequency domain resource in the first frequency domain resource set, for example, may be frequency domain resource whose frequency domain location is close to that of a non-dedicated frequency domain resource. In this case, the first frequency domain resource may also be understood as the specified frequency domain resource mentioned above, to help the second device perform detection conveniently, or may be frequency domain resource at any frequency domain location.

The second device may perform signal detection on the first frequency domain resource, to obtain a detection result corresponding to the first frequency domain resource. The detection result corresponding to the first frequency domain resource may indicate a signal pattern of a signal on the first frequency domain resource. When the first frequency domain resource is used by the device using the first communication manner, the signal pattern of the signal on the first frequency domain resource is a signal pattern of a signal corresponding to the first communication manner. In this way, the second device can accurately determine, based on the detection result corresponding to the first frequency domain resource, that the first frequency domain resource is currently used by the device using the first communication manner. For a specific implementation principle, refer to the related description of the first device. Details are not described again. Alternatively, when the first frequency domain resource is not used by the device using the first communication manner, the signal pattern of the signal on the first frequency domain resource is not a signal pattern of a signal corresponding to the first communication manner. In this way, the second device can accurately determine, based on the detection result corresponding to the first frequency domain resource, that the first frequency domain resource is not currently used by the device using the first communication manner. For a specific implementation principle, refer to the related description of the first device. Details are not described again.

If the first frequency domain resource is currently used by the device using the first communication manner, the second device determines that all of the occupied frequency domain resource is also currently used by the device using the first communication manner, or if the first frequency domain resource is not currently used by the device using the first communication manner, the second device determines that the occupied frequency domain resource is not currently used by the device using the first communication manner.

It may be understood that because the second device may not sense a specific device that uses the occupied frequency domain resource, the second device usually determines a type of device that uses the occupied frequency domain resource, for example, whether the occupied frequency domain resource is used by the device using the first communication manner. However, when the second device can sense the specific device that uses the occupied frequency domain resource, the second device may also determine the device that specifically uses the occupied frequency domain resource, for example, whether the occupied frequency domain resource is used by the first device. This is not limited in this embodiment of this application.

For example, as shown in FIG. 3, the frequency domain resource 0 and the frequency domain resource 1 are occupied frequency domain resource. A SparkLink device transmits a signal on the frequency domain resource 0 to the frequency domain resource 3 by default. A Wi-Fi device may determine, by performing signal detection on the frequency domain resource 0, that the frequency domain resource 0 is used by a device using a SparkLink communication manner, and determine that the frequency domain resource 1 is also used by the device using the SparkLink communication manner.

Optionally, the first device may not use frequency domain resource in a full frequency band. That is, if the first device needs to transmit a signal, the first device may transmit the signal on a part of frequency domain resource in the first frequency domain resource set. In this case, the second device may perform signal detection in a targeted manner, to accurately determine which frequency domain resource is used by the device using the first communication manner and which frequency domain resource is not used by the device using the first communication manner.

For example, the second device may perform signal detection on each frequency domain resource in the occupied frequency domain resource, to obtain a detection result corresponding to each frequency domain resource. The detection result corresponding to each frequency domain resource indicates a signal pattern of a signal on the frequency domain resource; and if the frequency domain resource is used by the device using the first communication manner, the signal pattern of the signal on the frequency domain resource is a signal pattern of a signal corresponding to the first communication manner; or if the frequency domain resource is not used by the device using the first communication manner, the signal pattern of the signal on the frequency domain resource is not a signal pattern of a signal corresponding to the first communication manner. In this way, the second device determines, based on the detection result corresponding to each frequency domain resource, that all of the occupied frequency domain resource is currently used by the device using the first communication manner, a part of occupied frequency domain resource is currently used by the device using the first communication manner, or the occupied frequency domain resource is not currently used by the device using the first communication manner.

For example, as shown in FIG. 3, the frequency domain resource 0 and the frequency domain resource 1 are occupied frequency domain resource. A SparkLink device may select the frequency domain resource 1 and the frequency domain resource 2 to transmit a signal. A Wi-Fi device performs signal detection on the frequency domain resource 0 and the frequency domain resource 1, and determines that the frequency domain resource 1 is used by a device using a SparkLink communication manner, and the frequency domain resource 0 is not used by the device using the SparkLink communication manner.

In this embodiment of this application, if the occupied frequency domain resource is not currently used by the device using the first communication manner, the second device may determine the used frequency domain resource as the frequency domain resource currently available to the second device. That is, the second device may continue to occupy the frequency domain resource. This improves resource utilization.

For example, as shown in (a) in FIG. 3, frequency domain resource used by a Wi-Fi device includes frequency domain resource from 5475 MHz to 5635 MHz, and the frequency domain resource 0 and the frequency domain resource 1, where the frequency domain resource 0 and the frequency domain resource 1 are occupied frequency domain resource. The Wi-Fi device determines, through signal detection, that the frequency domain resource 0 and the frequency domain resource 1 are not used by a device using a SparkLink communication manner. In this case, frequency domain resource available to the Wi-Fi device may still include the frequency domain resource from 5475 MHz to 5635 MHz and the frequency domain resource 0 and the frequency domain resource 1.

Alternatively, if all of the occupied frequency domain resource is currently used by the device using the first communication manner, the second device determines the non-dedicated frequency domain resource as the available frequency domain resource. That is, the second device should avoid a device using a higher-priority communication manner, for example, the first device, and no longer occupy the frequency domain resource, to avoid affecting signal transmission of the first device.

For example, as shown in (a) in FIG. 3, frequency domain resource used by a Wi-Fi device includes frequency domain resource from 5475 MHz to 5635 MHz, and the frequency domain resource 0 and the frequency domain resource 1, where the frequency domain resource 0 and the frequency domain resource 1 are occupied frequency domain resource. The Wi-Fi device determines, through signal detection, that the frequency domain resource 0 and the frequency domain resource 1 are used by a device using a SparkLink communication manner. In this case, frequency domain resource available to the Wi-Fi device includes the frequency domain resource from 5475 MHz to 5635 MHz.

Alternatively, if a part of the occupied frequency domain resource is used by the device using the first communication manner, the second device may determine the non-dedicated frequency domain resource and frequency domain resource that is in the occupied frequency domain resource and that is not used by the device using the first communication manner as the available frequency domain resource. That is, the second device should avoid a device using a higher-priority communication manner, for example, a first device, and no longer occupy the frequency domain resource that has been used by the first device, to avoid affecting signal transmission of the first device. However, for the frequency domain resource that is not used by the first device, the second device may still continue to occupy the frequency domain resource, to ensure signal transmission of the second device.

For example, as shown in (a) in FIG. 3, frequency domain resource used by a Wi-Fi device includes frequency domain resource from 5475 MHz to 5635 MHz, and the frequency domain resource 0 and the frequency domain resource 1, where the frequency domain resource 0 and the frequency domain resource 1 are occupied frequency domain resource. The Wi-Fi device determines, through signal detection, that the frequency domain resource 1 is used by a device using a SparkLink communication manner, and the frequency domain resource 0 is not used by the device using the SparkLink communication manner. In this case, frequency domain resource available to the Wi-Fi device may include the frequency domain resource from 5475 MHz to 5635 MHz and the frequency domain resource 0.

In another possible manner, the used frequency domain resource may include the non-dedicated frequency domain resource. In this case, the second device determines whether there is currently idle frequency domain resource in the first frequency domain resource set. That is, if the frequency domain resource used by the second device includes only the non-dedicated frequency domain resource, the second device may determine whether there is idle frequency domain resource in the first frequency domain resource set, namely, frequency domain resource that is not used by the device using the first communication manner, so as to occupy the idle frequency domain resource, and improve signal transmission performance.

The second device may determine, by performing detection on each frequency domain resource in the first frequency domain resource set, whether there is frequency domain resource, in the first frequency domain resource set, without a signal within preset duration. For example, the second device may perform signal detection on each frequency domain resource in the first frequency domain resource set for a preset quantity of times within the preset duration, to obtain a detection result corresponding to each frequency domain resource. The detection result may indicate whether there is the signal corresponding to the first communication manner on the frequency domain resource within the preset duration. In this way, the second device can determine, based on the detection result corresponding to each frequency domain resource, whether there is the signal corresponding to the first communication manner on the frequency domain resource within the preset duration, and determine whether there is the frequency domain resource, in the first frequency domain resource set, without the signal corresponding to the first communication manner within preset duration, so as to meet a requirement of the second device for transmitting a signal on frequency domain resource with a larger bandwidth.

If the second device determines that there is the frequency domain resource, for example, first frequency domain resource, in the first frequency domain resource set, without the signal corresponding to the first communication manner within the preset duration, the second device determines that there is the idle first frequency domain resource in the first frequency domain resource set, and therefore determines the non-dedicated frequency domain resource and the first frequency domain resource as the available frequency domain resource, to improve signal transmission performance of the second device.

For example, as shown in (a) in FIG. 3, frequency domain resource used by a Wi-Fi device includes frequency domain resource from 5475 MHz to 5635 MHz. The Wi-Fi device performs signal detection on the frequency domain resource 0 to the frequency domain resource 3, and determines that the frequency domain resource 0 is the idle frequency domain resource. In this case, frequency domain resource available to the Wi-Fi device may include the frequency domain resource from 5475 MHz to 5635 MHz and the frequency domain resource 0.

If the second device determines that there is no frequency domain resource, in the first frequency domain resource set, with the signal corresponding to the first communication manner within the preset duration, the second device determines that there is no idle frequency domain resource in the first frequency domain resource set, and therefore determines the non-dedicated frequency domain resource as the available frequency domain resource, to maintain current signal transmission performance.

For example, as shown in (a) in FIG. 3, frequency domain resource used by a Wi-Fi device includes frequency domain resource from 5475 MHz to 5635 MHz. The Wi-Fi device performs signal detection on the frequency domain resource 0 to the frequency domain resource 3, and determines that there is no idle frequency domain resource in the frequency domain resource 0 to the frequency domain resource 3. In this case, frequency domain resource available to the Wi-Fi device still includes the frequency domain resource from 5475 MHz to 5635 MHz.

S202: The first device transmits the first signal on the frequency domain resource for communication.

The first device may carry the first signal on the frequency domain resource for communication, and send the first signal to another first device; or the first device may receive, on the frequency domain resource for communication, the first signal sent by another first device. This is not specifically limited.

S203: The second device transmits a second signal on the available frequency domain resource.

The second device may carry the second signal on the available frequency domain resource, and send the second signal to another second device; or the second device may receive, on the available frequency domain resource, the second signal sent by another second device. This is not specifically limited.

It may be understood that the device using the first communication manner may still use the non-dedicated frequency domain resource in the unlicensed frequency band, for example, use the non-dedicated frequency domain resource by using the LBT mechanism. Specific implementation is not limited.

In conclusion, there may be a priority relationship between different communication manners. For example, a priority of a first communication manner is higher than a priority of the second communication manner. In this case, compared with the device using the second communication manner, the device using the first communication manner may be configured with a dedicated frequency domain resource set in the unlicensed frequency band, or preferentially configured with a frequency domain resource set, for example, the first frequency domain resource set, in the unlicensed frequency band. In this way, the device using the first communication manner, for example, the first device, can directly transmit the signal on the frequency domain resource in the first frequency domain resource set. This avoids access difficulty of the device, and meets a communication requirement of the device.

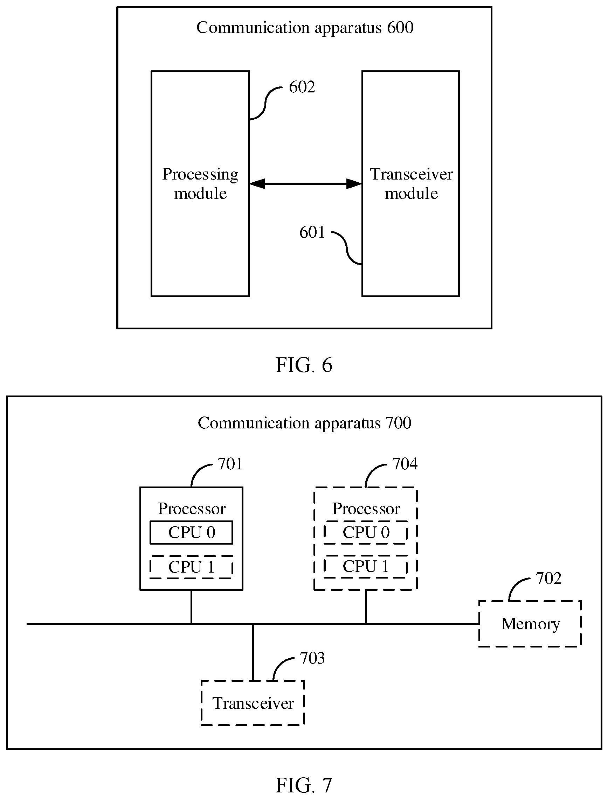

The foregoing describes in detail the communication method provided in embodiments of this application with reference to FIG. 2 to FIG. 5. A communication apparatus configured to perform the communication method according to embodiments of this application is described below in detail with reference to FIG. 6 and FIG. 7.

FIG. 6 is a diagram 1 of a structure of a communication apparatus according to an embodiment of this application. For example, as shown in FIG. 6, the communication apparatus 600 includes a transceiver module 601 and a processing module 602. For ease of description, FIG. 6 shows only main components of the communication apparatus.

In some embodiments, the communication apparatus 600 is applicable to the communication system shown in FIG. 1, to perform a function of the first device in the foregoing method.

The transceiver module 601 may perform a receiving and sending function of the communication apparatus 600, for example, perform S202. The processing module 602 may perform a function of the communication apparatus 600 other than the receiving and sending function, for example, perform S201.

For example, the processing module 602 is configured to determine frequency domain resource for communication, and the transceiver module 601 is configured to transmit a first signal on the frequency domain resource for communication. The communication apparatus 600 is a device using a first communication manner, the frequency domain resource for communication belongs to a first frequency domain resource set, the first frequency domain resource set is a frequency domain resource set that is in an unlicensed frequency band and that is configured for use by the device using the first communication manner, a priority of the first communication manner is higher than a priority of a second communication manner, and frequency domain resource used by a device using the second communication manner is frequency domain resource other than the frequency domain resource for communication in the unlicensed frequency band.

In a possible design solution, the frequency domain resource for communication is a part or all of frequency domain resource in the first frequency domain resource set. Specifically, the frequency domain resource for communication may be flexibly selected based on an actual requirement. This is not limited.

In a possible design solution, the processing module 602 is further configured to determine, by detecting the first frequency domain resource set, the frequency domain resource for communication.

Optionally, the processing module 602 is further configured to: if determining, by detecting the first frequency domain resource set, that there is occupied frequency domain resource in the first frequency domain resource set, the processing module 602 is further configured to determine whether remaining frequency domain resource meets a transmission requirement of the first signal, where the occupied frequency domain resource is the frequency domain resource used by the device using the second communication manner, and the remaining frequency domain resource is frequency domain resource other than the occupied frequency domain resource in the first frequency domain resource set.

If the remaining frequency domain resource meets the transmission requirement, the processing module 602 is further configured to determine a part or all of the remaining frequency domain resource as the frequency domain resource for communication. Altenatively, if the remaining frequency domain resource does not meet the transmission requirement, the processing module 602 is further configured to determine the remaining frequency domain resource and a part or all of the occupied frequency domain resource as the frequency domain resource for communication.

Further, the processing module 602 is further configured to perform signal detection on each frequency domain resource in the first frequency domain resource set, to obtain a detection result corresponding to each frequency domain resource, where the detection result corresponding to each frequency domain resource indicates a signal pattern of a signal on the frequency domain resource; and if the frequency domain resource is used by the device using the second communication manner, the signal pattern of the signal on the frequency domain resource is a signal pattern of a signal corresponding to the second communication manner; or if the frequency domain resource is not used by the device using the second communication manner, the signal pattern of the signal on the frequency domain resource is not a signal pattern of a signal corresponding to the second communication manner. The processing module 602 is further configured to determine the occupied frequency domain resource based on the detection result corresponding to each frequency domain resource.

In a possible design solution, the frequency domain resource in the first frequency domain resource set is consecutive frequency domain resource, or the frequency domain resource in the first frequency domain resource set is non-consecutive frequency domain resource. This is not limited.

In a possible design solution, the first communication manner is a SparkLink communication manner, and the second communication manner is a wireless fidelity Wi-Fi communication manner.

In a possible design solution, that the priority of the first communication manner is higher than the priority of the second communication manner means that the first frequency domain resource set is preferentially allocated, in the unlicensed frequency band, to the device using the first communication manner, or the first frequency domain resource set is a dedicated frequency domain resource set of the device using the first communication manner in the unlicensed frequency band.

Optionally, the transceiver module 601 may include a sending module (not shown in FIG. 6) and a receiving module (not shown in FIG. 6). The sending module is configured to implement a sending function of the communication apparatus 600, and the receiving module is configured to implement a receiving function of the communication apparatus 600.

Optionally, the communication apparatus 600 may further include a storage module (not shown in FIG. 6). The storage module stores a program or instructions. When the processing module 602 executes the program or the instructions, the communication apparatus 600 can perform the function of the first device in the foregoing method.

It may be understood that the communication apparatus 600 may be a terminal, like a SparkLink device, or may be a chip (system) or another part or component that may be disposed in the terminal, or may be an apparatus including the terminal. This is not limited in this application.

In addition, for technical effect of the communication apparatus 600, refer to the technical effect of the communication method shown in FIG. 2. Details are not described herein again.

In some other embodiments, the communication apparatus 600 is applicable to the communication system shown in FIG. 1, to perform a function of the second device in the foregoing method.

The transceiver module 601 may perform a receiving and sending function of the communication apparatus 600, for example, perform S203. The processing module 602 may perform a function of the communication apparatus 600 other than the receiving and sending function, for example, perform S201.

For example, the processing module 602 is configured to determine available frequency domain resource, and the transceiver module 601 is configured to transmit a second signal on the available frequency domain resource. The communication apparatus according to the fourth aspect is a device using a second communication manner, the device using the second communication manner is allowed to use frequency domain resource in an unlicensed frequency band, a priority of the second communication manner is lower than a priority of a first communication manner, and when both the communication apparatus according to the fourth aspect and a device using the first communication manner are in a working state, the available frequency domain resource includes frequency domain resource in the unlicensed frequency band other than frequency domain resource used by the device using the first communication manner.

In a possible design solution, the processing module 602 is further configured to determine the available frequency domain resource based on frequency domain resource used by a second device in the unlicensed frequency band.

Optionally, frequency domain resource, in the unlicensed frequency band, configured for use by the device using the first communication manner is a first frequency domain resource set, and the used frequency domain resource includes frequency domain resource other than the first frequency domain resource set in the unlicensed frequency band and a part or all of frequency domain resource in the first frequency domain resource set. The processing module 602 is further configured to determine whether the part or all of frequency domain resource is currently used by the device using the first communication manner.

If the part or all of frequency domain resource is not currently used by the device using the first communication manner, the processing module 602 is further configured to determine the used frequency domain resource as the available frequency domain resource.

Alternatively, if the part or all of frequency domain resource is all used by the device using the first communication manner, the processing module 602 is further configured to determine the frequency domain resource other than the first frequency domain resource set in the unlicensed frequency band as the available frequency domain resource.

Alternatively, if the part or all of frequency domain resource is partially used by the device using the first communication manner, the processing module 602 is further configured to determine the frequency domain resource other than the first frequency domain resource set in the unlicensed frequency band and frequency domain resource that is in the part or all of frequency domain resource and that is not used by the device using the first communication manner as the available frequency domain resource.

Further, the processing module 602 is further configured to determine whether first frequency domain resource in the first frequency domain resource set is currently used by the device using the first communication manner, where the first frequency domain resource is any frequency domain resource in the first frequency domain resource set. If the first frequency domain resource is currently used by the device using the first communication manner, the processing module 602 is further configured to determine that the part or all of frequency domain resource is all currently used by the device using the first communication manner. Alternatively, if the first frequency domain resource is not currently used by the device using the first communication manner, the processing module 602 is further configured to determine that the part or all of frequency domain resource is not currently used by the device using the first communication manner.

Further, that the second device determines whether first frequency domain resource in the first frequency domain resource set is currently used by the device using the first communication manner includes: The second device performs signal detection on the first frequency domain resource, to obtain a detection result corresponding to the first frequency domain resource, where the detection result indicates a signal pattern of a signal on the first frequency domain resource. If the signal pattern of the signal on the first frequency domain resource is a signal pattern of a signal corresponding to the first communication manner, the second device may accurately determine, based on the detection result, that the first frequency domain resource is currently used by the device using the first communication manner. Alternatively, if the signal pattern of the signal on the first frequency domain resource is not a signal pattern of a signal corresponding to the first communication manner, the second device may accurately determine, based on the detection result, that the first frequency domain resource is currently not used by the device using the first communication manner.

Further, the processing module 602 is further configured to perform signal detection on each frequency domain resource in the part or all of frequency domain resource, to obtain a detection result corresponding to each frequency domain resource, where the detection result corresponding to each frequency domain resource indicates a signal pattern of a signal on the frequency domain resource; and if the frequency domain resource is used by the device using the first communication manner, the signal pattern of the signal on the frequency domain resource is a signal pattern of a signal corresponding to the first communication manner; or if the frequency domain resource is not used by the device using the first communication manner, the signal pattern of the signal on the frequency domain resource is not a signal pattern of a signal corresponding to the first communication manner. The processing module 602 is further configured to determine, based on the detection result corresponding to each frequency domain resource, that the part or all of frequency domain resource is partially used by the device using the first communication manner.

Optionally, the frequency domain resource, in the unlicensed frequency band, configured for use by the device using the first communication manner is the first frequency domain resource set, and the used frequency domain resource includes frequency domain resource other than the first frequency domain resource set in the unlicensed frequency band. The processing module 602 is further configured to determine whether there is currently idle frequency domain resource in the first frequency domain resource set. If there is currently idle first frequency domain resource in the first frequency domain resource set, the processing module 602 is further configured to determine the frequency domain resource other than the first frequency domain resource set in the unlicensed frequency band and the first frequency domain resource as the available frequency domain resource. Alternatively, if there is currently no idle frequency domain resource in the first frequency domain resource set, the processing module 602 is further configured to determine the used frequency domain resource as the available frequency domain resource.

Further, the processing module 602 is further configured to determine, by performing detection on each frequency domain resource in the first frequency domain resource set, whether there is frequency domain resource, in the first frequency domain resource set, without a signal corresponding to the first communication manner within preset duration. If there is first frequency domain resource, in the first frequency domain resource set, without the signal corresponding to the first communication manner within preset duration, the processing module 602 is further configured to determine that there is the idle first frequency domain resource in the first frequency domain resource set.

In a possible design solution, the processing module 602 is further configured to periodically determine the available frequency domain resource.

In a possible design solution, the frequency domain resource in the first frequency domain resource set is consecutive frequency domain resource.

In a possible design solution, the first communication manner is a SparkLink communication manner, and the second communication manner is a wireless fidelity Wi-Fi communication manner.

In a possible design solution, that the priority of the first communication manner is higher than the priority of the second communication manner means that the first frequency domain resource set is preferentially allocated, in the unlicensed frequency band, to the device using the first communication manner, or the first frequency domain resource set is a dedicated frequency domain resource set of the device using the first communication manner in the unlicensed frequency band.

Optionally, the transceiver module 601 may include a sending module (not shown in FIG. 6) and a receiving module (not shown in FIG. 6). The sending module is configured to implement a sending function of the communication apparatus 600, and the receiving module is configured to implement a receiving function of the communication apparatus 600.

Optionally, the communication apparatus 600 may further include a storage module (not shown in FIG. 6). The storage module stores a program or instructions. When the processing module 602 executes the program or the instructions, the communication apparatus 600 can perform the function of the second device in the foregoing method.

It may be understood that the communication apparatus 600 may be a terminal, like a Wi-Fi device, or may be a chip (system) or another part or component that may be disposed in the terminal, or may be an apparatus including the terminal. This is not limited in this application.

In addition, for technical effect of the communication apparatus 600, refer to the technical effect of the communication method shown in FIG. 2. Details are not described herein again.

FIG. 7 is a diagram 2 of a structure of a communication apparatus according to an embodiment of this application. For example, the communication apparatus may be a terminal, or may be a chip (system) or another part or component that may be disposed in the terminal. As shown in FIG. 7, the communication apparatus 700 may include a processor 701. Optionally, the communication apparatus 700 may further include a memory 702 and/or a transceiver 703. The processor 701 is coupled to the memory 702 and the transceiver 703, for example, may be connected to the memory 702 and the transceiver 703 through a communication bus.

The following describes each part in the communication apparatus 700 in detail with reference to FIG. 7.

The processor 701 is a control center of the communication apparatus 700, and may be one processor, or may be a general term of a plurality of processing elements. For example, the processor 701 is one or more central processing units (central processing units, CPUs), or may be an application-specific integrated circuit (application-specific integrated circuit, ASIC), or may be one or more integrated circuits configured to implement embodiments of this application, for example, one or more microprocessors (digital signal processors, DSPs), or one or more field programmable gate arrays (field programmable gate arrays, FPGAs).

Optionally, the processor 701 may perform various functions of the communication apparatus 700 by running or executing a software program stored in the memory 702 and invoking data stored in the memory 702, for example, perform the communication method shown in FIG. 2.

During specific implementation, in an embodiment, the processor 701 may include one or more CPUs, for example, a CPU 0 and a CPU 1 in FIG. 7.

During specific implementation, in an embodiment, the communication apparatus 700 may alternatively include a plurality of processors, for example, the processor 701 and a processor 704 shown in FIG. 7. Each of the processors may be a single-core processor (single-CPU), or may be a multi-core processor (multi-CPU). The processor herein may be one or more devices, circuits, and/or processing cores configured to process data (for example, computer program instructions).

The memory 702 is configured to store a software program for performing the solutions of this application, and the processor 701 controls execution of the software program. For a specific implementation, refer to the foregoing method embodiment, and details are not described herein again.

Optionally, the memory 702 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer. This is not limited thereto. The memory 702 may be integrated with the processor 701, or may exist independently, and is coupled to the processor 701 through an interface circuit (not shown in FIG. 7) in the communication apparatus 700. This is not specifically limited in this embodiment of this application.

The transceiver 703 is configured for communication with another communication apparatus. For example, the communication apparatus 700 is a terminal, and the transceiver 703 may be configured to communicate with a network device or communicate with another terminal device. For another example, the communication apparatus 700 is a network device, and the transceiver 703 may be configured to communicate with a terminal or communicate with another network device.

Optionally, the transceiver 703 may include a receiver and a transmitter (not separately shown in FIG. 7). The receiver is configured to implement a receiving function, and the transmitter is configured to implement a sending function.

Optionally, the transceiver 703 may be integrated with the processor 701, or may exist independently, and is coupled to the processor 701 through an interface circuit (not shown in FIG. 7) in the communication apparatus 700. This is not specifically limited in this embodiment of this application.

It may be understood that a structure of the communication apparatus 700 shown in FIG. 7 does not constitute a limitation on the communication apparatus. An actual communication apparatus may include more or fewer parts than those shown in the figure, or combine some parts, or have different part arrangement.

In addition, for technical effect of the communication apparatus 700, refer to the technical effect of the method in the foregoing method embodiments. Details are not described herein again.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor, or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, circuit), firmware, or any combination thereof. When software is used to implement embodiments, all or some of the foregoing embodiments may be implemented in a form of a computer program product. The computer program product includes one or more computer instructions or computer programs. When the program instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, like a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association between associated objects and represents that three relationships may exist. For example, A and/or B may represent the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes various media that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
determining, by a first device, frequency domain resource for communication, wherein the first device is a device using a first communication manner, the frequency domain resource for communication belongs to a first frequency domain resource set, the first frequency domain resource set is a frequency domain resource set that is in an unlicensed frequency band and that is configured for use by the device using the first communication manner, a priority of the first communication manner is higher than a priority of a second communication manner, and frequency domain resource used by a device using the second communication manner is frequency domain resource other than the frequency domain resource for communication in the unlicensed frequency band; and
transmitting, by the first device, a first signal on the frequency domain resource for communication.

2. The method according to claim 1, wherein the frequency domain resource for communication is a part or all of frequency domain resource in the first frequency domain resource set.

3. The method according to claim 1 or 2, wherein the determining, by a first device, frequency domain resource for communication comprises:
determining, by the first device by detecting the first frequency domain resource set, the frequency domain resource for communication.

4. The method according to claim 3, wherein the determining, by the first device by detecting the first frequency domain resource set, the frequency domain resource for communication comprises:
if the first device determines, by detecting the first frequency domain resource set, that there is occupied frequency domain resource in the first frequency domain resource set, determining, by the first device, whether remaining frequency domain resource meets a transmission requirement of the first signal, wherein the occupied frequency domain resource is the frequency domain resource used by the device using the second communication manner, and the remaining frequency domain resource is frequency domain resource other than the occupied frequency domain resource in the first frequency domain resource set; and
if the remaining frequency domain resource meets the transmission requirement, determining, by the first device, a part or all of the remaining frequency domain resource as the frequency domain resource for communication; or if the remaining frequency domain resource does not meet the transmission requirement, determining, by the first device, the remaining frequency domain resource and a part or all of the occupied frequency domain resource as the frequency domain resource for communication.

5. The method according to any one of claims 1 to 4, wherein the frequency domain resource in the first frequency domain resource set is consecutive frequency domain resource.

6. The method according to any one of claims 1 to 5, wherein the first communication manner is a SparkLink communication manner, and the second communication manner is a wireless fidelity Wi-Fi communication manner.

7. The method according to any one of claims 1 to 6, wherein that the priority of the first communication manner is higher than the priority of the second communication manner means that the first frequency domain resource set is preferentially allocated, in the unlicensed frequency band, to the device using the first communication manner, or the first frequency domain resource set is a dedicated frequency domain resource set of the device using the first communication manner in the unlicensed frequency band.

8. A communication method, wherein the method comprises:
determining, by a second device, available frequency domain resource, wherein the second device is a device using a second communication manner, the device using the second communication manner is allowed to use frequency domain resource in an unlicensed frequency band, a priority of the second communication manner is lower than a priority of a first communication manner, and when both the second device and a device using the first communication manner are in a working state, the available frequency domain resource comprises frequency domain resource in the unlicensed frequency band other than frequency domain resource used by the device using the first communication manner; and
transmitting, by the second device, a second signal on the available frequency domain resource.

9. The method according to claim 8, wherein the determining, by a second device, available frequency domain resource comprises:
determining, by the second device, the available frequency domain resource based on frequency domain resource used by the second device in the unlicensed frequency band.

10. The method according to claim 9, wherein frequency domain resource, in the unlicensed frequency band, configured for use by the device using the first communication manner is a first frequency domain resource set, and the used frequency domain resource comprises frequency domain resource other than the first frequency domain resource set in the unlicensed frequency band and a part or all of frequency domain resource in the first frequency domain resource set; and the determining, by the second device, the available frequency domain resource based on frequency domain resource used by the second device in the unlicensed frequency band comprises:
determining, by the second device, whether the part or all of frequency domain resource is currently used by the device using the first communication manner; and
if the part or all of frequency domain resource is not currently used by the device using the first communication manner, determining, by the second device, the used frequency domain resource as the available frequency domain resource; or if the part or all of frequency domain resource is all used by the device using the first communication manner, determining, by the second device, the frequency domain resource other than the first frequency domain resource set in the unlicensed frequency band as the available frequency domain resource; or if the part or all of frequency domain resource is partially used by the device using the first communication manner, determining, by the second device, the frequency domain resource other than the first frequency domain resource set in the unlicensed frequency band and frequency domain resource that is in the part or all of frequency domain resource and that is not used by the device using the first communication manner as the available frequency domain resource.

11. The method according to claim 10, wherein determining, by the second device, that the part or all of frequency domain resource is all used by the device using the first communication manner comprises:
determining, by the second device, whether first frequency domain resource in the first frequency domain resource set is currently used by the device using the first communication manner, wherein the first frequency domain resource is any frequency domain resource in the first frequency domain resource set; and
if the first frequency domain resource is currently used by the device using the first communication manner, determining, by the second device, that the part or all of frequency domain resource is all currently used by the device using the first communication manner; or if the first frequency domain resource is not currently used by the device using the first communication manner, determining, by the second device, that the part or all of frequency domain resource is not currently used by the device using the first communication manner.

12. The method according to claim 9, wherein frequency domain resource, in the unlicensed frequency band, configured for use by the device using the first communication manner is the first frequency domain resource set, and the used frequency domain resource comprises frequency domain resource other than the first frequency domain resource set in the unlicensed frequency band; and the determining, by the second device, the available frequency domain resource based on frequency domain resource used by the second device in the unlicensed frequency band comprises:
determining, by the second device, whether there is currently idle frequency domain resource in the first frequency domain resource set; and
if there is currently idle first frequency domain resource in the first frequency domain resource set, determining, by the second device, the frequency domain resource other than the first frequency domain resource set in the unlicensed frequency band and the first frequency domain resource as the available frequency domain resource; or if there is currently no idle frequency domain resource in the first frequency domain resource set, determining, by the second device, the used frequency domain resource as the available frequency domain resource.

13. The method according to any one of claims 8 to 12, wherein the determining, by a second device, available frequency domain resource comprises:
periodically determining, by the second device, the available frequency domain resource.

14. The method according to any one of claims 8 to 13, wherein the frequency domain resource in the first frequency domain resource set is consecutive frequency domain resource.

15. The method according to any one of claims 8 to 14, wherein the first communication manner is a SparkLink communication manner, and the second communication manner is a wireless fidelity Wi-Fi communication manner.

16. The method according to any one of claims 8 to 15, wherein that the priority of the first communication manner is higher than the priority of the second communication manner means that the first frequency domain resource set is preferentially allocated, in the unlicensed frequency band, to the device using the first communication manner, or the first frequency domain resource set is a dedicated frequency domain resource set of the device using the first communication manner in the unlicensed frequency band.

17. A communication apparatus, wherein the apparatus comprises modules configured to perform the method according to any one of claims 1 to 7.

18. A communication apparatus, wherein the apparatus comprises modules configured to perform the method according to any one of claims 8 to 16.

19. A communication apparatus, wherein the communication apparatus comprises a processor and a memory, the memory is configured to store computer instructions, and when the processor executes the instructions, the communication apparatus is enabled to perform the method according to any one of claims 1 to 16.

20. A computer-readable storage medium, wherein the computer-readable storage medium comprises a computer program or instructions, and when the computer program or the instructions are run on a computer, the computer is enabled to perform the method according to any one of claims 1 to 16.
